# EUROPEAN PATENT APPLICATION

(11) **EP 4 495 423 A1**
(43) Date of publication of application: **22.01.2025**
(21) Application number: 23187015.5
(22) Date of filing: 21.07.2023
(51) Int. Cl.: F03D 80/50, F03D 80/55

(54) **WIND TURBINE SERVICE SYSTEM AND METHOD**

(71) Applicant: Siemens Gamesa Renewable Energy A/S, 7330 Brande (DK)
(72) Inventor: Elberling, Jeffrey, Highland, 48357 (US); Frandsen, Simon, 6960 Hvide Sande (DK); Jakobsen, Mikael Stokholm, 7330 Brande (DK); Rosario, Fonte, 7100 Vejle (DK)
(74) Representative: SGRE-Association

(57) **Abstract**

A wind turbine service system configured to perform at least one service task in a wind turbine (200) is provided. The wind turbine (200) comprises at least two floors (211, 212) at different vertical positions. The wind turbine service system (10) comprises a service robot (100) that is self-propelled and that is controllable to perform the at least one service task and a vertical movement aid (250) extending between at least two of the floors (211, 212). The wind turbine service system (10) is configured to have a first mode of locomotion in which the service robot (100) is moved self-propelled and without mechanical guidance on at least one of the floors (211, 212), and wherein the wind turbine service system (10) is further configured to have a second mode of locomotion in which the service robot (100) interacts with the vertical movement aid (250) to move the service robot between the at least two floors (211, 212).

## Description

### FIELD OF THE INVENTION

The present invention relates to a wind turbine service system configured to perform at least one service task in a wind turbine. It further relates to a method of servicing a wind turbine by means of such service system, to a method of operating a wind turbine, and to a wind turbine comprising a respective service system.

### BACKGROUND

With the proliferation of wind-based energy production, wind turbines are being installed at remote locations. Service technicians visit the wind turbines at regular intervals to ensure compliance with the service requirements and to ensure a failsafe operation.

An electrical component of the wind turbine, e.g. of its power converter, may still fail, whereupon the wind turbine may cease power production until a maintenance crew repairs the power converter. To reduce the down time, the document EP 2472103 A2 provides a maintenance system in the wind turbine that exchanges a faulty converter module. A reduction in unscheduled shutdown time may thereby be achieved. The functionality provided by such maintenance system is however limited to a specified repair task for a specific component.

It is desirable to reduce the downtime of a wind turbine and to maintain the wind turbine in a safe operating state. It is further desirable to reduce costs for servicing the wind turbine while maintaining the wind turbine in a technically flawless condition.

### SUMMARY

Accordingly, there is a need to mitigate at least some of the drawbacks mentioned above and in particular to facilitate the servicing of wind turbines and to keep the wind turbines in a safe operating state.

This need is met by the features of the independent claims. The dependent claims describe embodiments of the invention.

According to an aspect of the present invention, a wind turbine service system configured to perform at least one service task in a wind turbine is provided. The wind turbine comprises at least two floors at different vertical positions, wherein the wind turbine service system comprises a service robot that is self-propelled and that is controllable to perform at least one service task, e.g. on one or more, or on each of the at least two floors. The wind turbine service system further comprises a vertical movement aid extending between the at least two floors. The wind turbine service system is configured to operate in a first mode of locomotion in which the service robot is moved self-propelled and without mechanical guidance on at least one of the floors, and is further configured to operate in a second mode of locomotion in which the service robot interacts with the vertical movement aid to move the service robot between the at least two floors.

Such wind turbine service system (herein also abbreviated as "service system" or "system") may allow the service robot to perform a service task at different horizontal levels of the wind turbine. Further, since the service robot may move independently on each floor, it may be enabled to perform a variety of different service tasks on the respective floor. Also, it may not be necessary to provide any system for moving the robot on the respective floor, such as a track or rail on which the robot moves. The service robot may for example be stationed on one of the at least two floors, and may perform one or more service tasks on one or more different floors of the wind turbine, which it may reach via a respective vertical movement aid extending from the floor on which it is stationed to the respective other floor, or between such other floors. A flexible service system allowing the performing of a variety of service tasks within the wind turbine without the presence of service personnel may thus be achieved. The costs and efforts for servicing the wind turbine may thus be reduced, in particular for wind turbines installed at remote locations, such as offshore wind turbines. The service system may further allow a more frequent inspection of wind turbine components, the performing of tests, and/or the inspection after the occurrence of events, so that a more reliable and fail-safe operation of the wind turbine may be achieved. Accordingly, the safety of operation may be increased and the down-time of wind turbine operation may be reduced.

Conventional service systems generally rely on service components that are movable along fixed paths and that can take fixed, predefined positions in order to, for example, perform a maintenance task. Contrary to the general perception that such fixed system provides a more reliable maintenance, it has been found that by providing a system that includes an autonomously moving robot that is further enabled to access different floors of the wind turbine, it becomes possible to provide a comprehensive and improved servicing of the wind turbine that may avoid the occurrence of faults and that may significantly extend time periods after which a service technician needs to visit the wind turbine.

The service robot may in particular move between the floors between which the vertical movement aid extends. One vertical movement aid may extend between plural floors, and may allow the service robot to move to these plural floors. Plural vertical movement aids may be provided that may extend between different of the at least two floors and may allow access of the service robot to the respective floors between which the respective vertical movement aid extends.

The vertical movement aid may in particular extend into a direction that has a vertical component wherein the vertical component of the direction is preferably at least equal to or larger than the horizontal component. The extension may for example have an inclination towards a horizontal plane between 45° and 90°. The service system may for example comprise one or more movement(s) aids extending in a direction having an inclination between 45° and 90°, or between 70° and 90°. Further vertical movement aids with lower inclination may of course be provided.

In an embodiment, the service system may be configured to provide in the second mode of locomotion a mechanically guided movement of the service robot and/or a driven movement of the service robot that is driven by an actuator external to the service robot. This may facilitate the service robot to move between different floors of the wind turbine. Such actuator may comprise an electric motor, a hydraulic or pneumatic cylinder, or the like.

The vertical movement aid may for example comprise one or a combination of a guiding rail, a track, a ladder, a staircase, a conveyor, an escalator, an elevator (e.g., a lift), and a hoist. Plural of such vertical movement aids may be provided, each extending between at least two floors of the wind turbine. An actively driven movement of the service robot may for example be achieved by providing an elevator onto which the service robot moves and which lifts or lowers the service robot to a different floor, or a conveyor, such as a chain, belt, or rope conveyor, onto which the service robot moves or onto which it holds to be moved from one floor to a different floor. Providing the movement aid in form of a mechanical guide may have the advantage that existing elements, such as a rail on a ladder or staircase, or the ladder itself, may be used as the vertical movement aid. On the other hand, an actively driven vertical movement aid may have the advantage that the service robot may have a relatively simple configuration while still being enabled to overcome significant vertical distances. Also, it allows movement in an essentially vertical direction, thus reducing the space required for the vertical movement aid.

The vertical movement aid may comprise a vertical movement aid configured to be climbed by service personnel, in particular by a human. The vertical movement aid may comprise a vertical movement aid that forms part of or is mounted to a ladder or staircase. The service robot may be configured to climb such vertical movement aid or to use an element of such vertical movement aid, such as a handrail, to move between the floors that the vertical movement aid connects. For example, the vertical movement aid may have a configuration that allows the service robot to travel on the vertical movement aid, or the service robot may have a configuration that is adapted to be capable of climbing the vertical movement aid, such as a configuration capable of climbing the stairs of a staircase or the rungs of a ladder. For example, existing handrails, steps, rungs, and the like may be used by the service robot to hold on (e.g. clamp on or hook on), or a respective rail or track may be added to an existing ladder or staircase.

The service robot may comprise a holding device. The holding device may be configured to interact with the vertical movement aid, in particular to hold (e.g. clamp) onto the vertical movement aid, to support the robot when the robot moves between the at least two floors. The holding device may comprise a clamp, a hook, a grip, a roller, a carriage, and/or a pinion, or any combination thereof. For example, a grip, roller unit, and/or carriage of the service robot may interact with a rail or track of the vertical movement aid. A simple but effective means may thus be provided for allowing the service robot to move between the different floors.

In the first mode of locomotion, the service system may be configured to provide a free movement of the service robot in two dimensions on the respective floor. The floor may lie in a horizontal plane or an inclined plane, and the service robot may be configured to freely move in two dimensions on the respective plane. The service robot may thus be allowed to reach a variety of positions on the floor, without the need to provide mechanical guides, such as tracks or rails, on the floor. The flexibility and reach of the service robot may thus be increased. Movement without mechanical guidance may in particular refer to a movement that is not guided by a rail, a track, or the like, but that is rather unrestricted in two dimensions. The robot may for example be configured to steer a direction of movement on the respective floor.

The service robot may comprise a mobile unit that is propelled by one or more wheels, a tracked drive, one or more legs, or a combination thereof. Legs including a wheeled or tracked drive may for example be provided. The mobile unit may include two or more continuous tracks, which may have the form of rubber belts, track shoe assemblies, or the like. The service robot may for example be provided with four tracked drive units. In a particular implementation, it may include four independently controllable tracked drive units, which may further be controllable to act as legs. The maneuverability of the service robot on the respective floor may thus be improved. Further, movement of the service robot between floors may be facilitated by such configuration.

The service robot may be configured to ascend or climb a vertical movement aid, in particular a stair or ladder, having an inclination to a horizontal plane of more than 45°. For this purpose, the service robot may be equipped with the respective wheeled and/or tracked drive, and/or a legged drive, and further optionally with a respective holding device, e.g. a gripper, hook, carriage, or the like.

The service system may be configured to perform a service task on each of the at least two floors by means of the service robot. In another implementation, the service robot may be stationed on one of the floors and may be configured to perform a service task on a different one of the floors. Preferably, the service robot is stationed on a floor on which it is to perform a service task. The service system may thus allow the performing of service tasks on a variety of floors of the wind turbine.

At least two of the floors may be arranged within a nacelle of the wind turbine. The vertical movement aid may comprise a vertical movement aid extending between these at least two floors within the nacelle. Further, at least one of the floors may be arranged outside a nacelle of the wind turbine. One of the floors may be arranged within a tower of the wind turbine, and/or one of the floors may be arranged on a top of the nacelle.

As an example, the at least two floors may comprise one or a combination of: a converter platform comprising an electrical power converter of the wind turbine; a transformer platform comprising an electrical power transformer of the wind turbine; a transmission platform comprising electrical power transmission equipment, such as HVAC or HVDC transmission equipment of the wind turbine; a yaw platform located at a position of a yaw drive or yaw bearing of the wind turbine; a bed frame floor located at a bed frame of the wind turbine; a generator floor located within a hollow shaft of a generator of the wind turbine or comprising a generator of the wind turbine; a hub floor located within a hub of a wind turbine rotor of the wind turbine; a top platform, such as a heli-hoist platform, a crane platform, and/or a roof top platform, located on a top of a nacelle of the wind turbine; and a tower platform located in a tower of the wind turbine, such as a tower top section platform, a tower mid section platform, and/or a tower bottom platform. It should be clear that depending on the configuration of the wind turbine, all of these floors may be but must not be provided. Preferably, a vertical movement aid extends to each of the respective floors that are provided. For example, at least a converter platform and a transformer platform may be provided, and the service robot may be stationed on one of the two platforms, e.g. the converter platform. Optionally, one or a combination of a bed frame platform, a tower platform, a yaw platform and a transmission platform are additionally provided. At least one, two, or three of these additional platforms may for example be provided. The service system may accordingly comprise plural vertical movement aids, such as two, three, four, five or more, each of which may extend between at least two of the floors. The plural vertical movement aids may in particular be provided so that each of the respective floors of the wind turbine can be reached by the service robot. The service system may be configured so that a service task is to be performed by the service robot on each of the respective floors. The wind turbine may certainly comprise further floors on which no service tasks are to be performed and/or which the service robot is not configured to reach.

The service system may further comprise a docking station configured to provide electrical power to the service robot to charge an energy storage device of the service robot. At the docking station, an electrical contact may be established to the service robot, and/or induction may be used to transfer electrical energy to the service robot.

The service robot may not comprise any cable connection or any other electrical connection when the service robot moves on a floor of the wind turbine. A free and unrestricted movement of the service robot may thus be achieved. The service robot may further be configured to move at least partly autonomously, e.g. under an automated control of a control system of the service system, e.g. in the robot or of the docking station.

The service system may further comprise a communication interface arranged in the wind turbine for communicating with the service robot. The service robot may be controllable via the communication interface to perform the at least one service task. Such communication interface may for example be provided by the docking station, or separately there from. The communication interface is preferably a wireless communication interface configured to provide a wireless communication with the service robot. Communication standards, such as WiFi, Bluetooth, or the like may be used for communication.

The service system may be configured to receive control commands for the service robot from a remote location and to provide these control commands to the service robot via the communication interface, and/or to receive control commands from a controller within the wind turbine and to provide respective control commands via the communication interface to the service robot.

The service robot may comprise a manipulator, a sensor, and/or a camera. The respective element may be mounted on a mobile platform of the service robot, such as the above-mentioned mobile unit. Preferably, all three elements are provided, which may facilitate the performing of a variety of service tasks by the service robot.

The at least one service task may include an inspection task, and/or a testing task, e.g. a function check task and the service robot may be configured to perform the respective at least one service task. Preferably, it is configured to perform plural different inspection tasks and testing tasks.

For example, the at least one service task may include an inspection of a mechanical component of the wind turbine. Preferably, it includes an inspection task in form of the inspection of a bolt connection and/or of an anchor point. Such inspection may improve the operational safety of the wind turbine and/or of service personnel, which may employ the anchor points to hook on a harness for personnel safety. Further, since such bolt connection and/or anchor point needs to be inspected at regular intervals, performing such inspection by the service robot may reduce the costs and efforts associated with such inspection. The service robot may be configured to perform a visual inspection, for example via a respective camera. The service robot may further be configured to forward respective images for evaluation and/or may be configured itself to evaluate respective images taken by the camera. The service robot may for example be configured to inspect a tension, fall direction, and/or state (e.g., deformation, corrosion, and/or deformation) of an anchor point. Respective anchor points may be provided at one, two, or more different floors of the wind turbine. For example, a converter platform may comprise two or more anchor points, a top platform may comprise two or more anchor points, and further platforms may optionally comprise two or more anchor points, and the service system may be configured to provide an inspection of each of these anchor points via the service robot.

The service robot may additionally or alternatively be configured to perform further inspection tasks, such as a visual inspection of an electric, hydraulic, and/or a pneumatic connection, e.g. of a respective cable, hose, or the like. The service system may in particular be configured to inspect, via the service robot, a hydraulic system and/or a lubrication system of the wind turbine. The service system may in particular be configured to inspect, via the service robot, one or a combination of a hose, a fitting, and a filter of such system of the wind turbine. Potential damages may thus be recognized early, and a failure of the respective system may be avoided.

The service system may be configured to automatically detect a component to be inspected and to automatically take one or more, e.g. a sequence, of images of the component to be inspected. It may for example be configured to take images of the component from different angles and/or positions. For this purpose, the service system may automatically move the robot to different positions and/or a imaging device, such as a camera, may be mounted to an actuator, such as a robotic arm, to allow different positions and/or angles of the imaging device.

The service robot may comprise a manipulator, which may be termed "manipulation platform". The manipulator may comprise at least one robotic arm having an end effector attached thereto or mountable thereto. Such manipulator may facilitate the performing of a testing task, e.g. a function check task by the service robot.

The robotic arm may be configured to mount and unmount two or more different end effectors. This may allow the mounting of different tools, testing equipment and the like to the robotic arm.

For example, the service system may comprise an end effector station comprising at least one, two, or more end effectors. The system may further be configured to mount at least one of the end effectors provided by the end effector station to the service robot, in particular its robotic arm. The service robot and/or the end effector station may be configured to be controllable to mount and unmount the respective end effector and to store an unmounted end effector in the end effector station. An end effector on the robotic arm may thus be exchanged efficiently. The end effector station may for example be part of the docking station.

The at least one end effector may comprise at least one of a gripper, a key for a cabinet in the wind turbine, and a testing device. Each of these end effectors is preferably provided in the end effector station. A respective key may for example allow the opening of electrical cabinets of the wind turbine and the performing of respective inspection and/or testing tasks in the cabinet. A testing device may not only include one or more end effectors for performing mechanical tests, but also a test spray, for example for performing a smoke detector test. By providing an end effector having such test spray, the respective smoke detector tests that have to be performed periodically may be performed by the service robot, thus further improving the safety and reducing servicing costs and efforts.

In an embodiment, the manipulator further comprises a height adjustment mechanism configured to extend the reach of the robotic arm in a vertical direction. For example, a height adjustable platform may be provided, and a base of the robotic arm may be mounted to such height adjustable platform. The height adjustment mechanism may comprise a telescopic section which may be driven electrically, hydraulically or pneumatically, and which may allow an extension in a vertical direction to change the vertical position of the platform. This may allow the providing of a more compact robot and may thus further increase the maneuverability of the service robot. This is particularly beneficial in a wind turbine in which space is restricted. By providing such compact service robot that moves on a floor without mechanical guides, more positions on the respective floor may be reached, so that a greater flexibility regarding the service tasks that can be performed by the service robot may be achieved. Also, further elements may be reached for inspection and/or function checks or tests by means of such height adjustment mechanism, which may be not reachable otherwise. This may further increase the versatility of the service robot and thus of the service system.

The robotic arm may for example have a length of at least 500 mm, preferably at least 700 mm. This may allow the service robot to each various components provided on different floors of the wind turbine for inspection and/or testing.

In an embodiment, the manipulator further comprises a rotating mechanism, such as a rotating platform, and the at least one robotic arm may be mounted to the rotating mechanism so as to be rotatable. The rotating mechanism may for example be provided on the height adjustment platform, if such is present. This may further increase the versatility of the service robot and allow the service robot to reach further locations and thus further components for inspection and/or testing. For example, at least two robotic arms may be mounted to the rotating platform. The rotating mechanism may for example comprise a base plate (on which one, two or more robotic arms can be mounted) that is driven by an actuator, such as an electric motor, for example by a gear motor, a stepper motor, or a servo motor, or the like. A compact but versatile service robot may thus be achieved.

The service system may for example be configured to cause the service robot to perform a circuit breaker test on a floor of the wind turbine. An end effector may be mounted to the robotic arm to push a test button to test the circuit breaker and to reset the circuit breaker, e.g. a relay, after verifying its function. The service system may be configured to first operate the service robot with a key end effector to open a cabinet comprising the circuit breaker, and to operate the service robot with a gripper end effector to perform the test. Both end effectors may each be provided on a respective robotic arm, or the end effector may be changed during the service task. A camera may be provided on the robotic arm with the end effector, or on a further robotic arm. This may facilitate the performing of the service task autonomously by the service system or under control of an operator at a remote site.

The service robot may have a width of less than 600 mm, preferably less than 500 mm, and/or a length of less than 700 mm, preferably less than 600 mm. A compact service robot that can easily maneuver within a nacelle of a wind turbine may thus be provided. The service robot may have a weight of less than 130 kg, preferably less than 120 kg. Movement of the service robot within the wind turbine may thereby be facilitated, in particular as the service robot may use vertical movement aids made for humans.

The service system may further comprise a remote operation center and a data connection between the service robot and the remote operation center to transmit monitoring data from the service robot to the remote operation center and/or to transmit control commands from the remote operation center to the service robot. Such data connection may be provided by the communication interface mentioned herein, which may form part of the docking station, or by a separate communication unit. The data connection may accordingly be a direct data connection or an indirect data connection, e.g. via the communication interface of the docking station. The data connection may comprise a data queuing function configured to queue service data generated by the service robot for transmission to the remote operation center. The data transmission may take place when there is sufficient bandwidth available on the data connection. This may facilitate remote controlling the service robot from the remote operation center while the service robot is collecting monitoring data. A remote operation center may be located remotely from the wind turbine, i.e. not within the wind turbine and/or not within a wind farm comprising the wind turbine. For example for an offshore wind turbine, the remote operation center is preferably located onshore or on board a floating vessel.

The at least one service task may further include an inspection task in form of the inspection of a fire extinguisher. The service system may in particular be configured to check, via the service robot, a pressure, contamination, corrosion, and/or wear of a fire extinguisher.

To perform an inspection task, the service system may be configured to cause the service robot to take images from at least two different positions and/or two different angles of the item to be inspected. A respective autonomous control may be provided within the service robot, or in a controller that is in communication with the service robot.

The at least one service task may include a smoke detector test. Respective smoke detectors may be located on two, three, or more different floors of the wind turbine. The service robot may be configured to open a cabinet housing a smoke detector. For example, a key end effector as described above and a test spray and effector may be provided each on a respective robotic arm, or the end effector may be exchanged during the service task. The service robot may be configured to apply test smoke from the test spray to the smoke detector to test the smoke detector. The service task may further include closing the cabinet after performing the test.

The at least one service task may include a test task in form of an emergency stop test. Respective emergency stops may be located on several floors of the wind turbine and may be provided to stop potentially hazardous functions of a wind turbine component. Respective emergency stops may need to be checked at specified time intervals to ensure that they activate an emergency control system of the wind turbine. The service robot may be provided with an end effector and may be configured to automatically activate the service stop to test the service stop. This may include pushing of the respective emergency stop button by the end effector, such as a gripper. Upon a successful activation of the emergency stop, which may be checked by the remote operation center, the emergency stop may be reset. The service robot may be configured to automatically reset the emergency stop. This may again be performed by the end effector mounted to the robotic arm, e.g. by a gripper.

The at least one service task may include an inspection task in form of the inspection of a fluid level of a wind turbine component. As an example, the service robot may be configured to inspect a yaw gear oil level, a transformer oil level, a cooling system fluid level, a gearbox oil level and/or a generator or cooling fluid level.

The at least one service task, which the service system is configured to perform via the service robot, may include any combination of the service tasks mentioned herein.

The service system may be configured to return the service robot to a docking station on a floor at which the service robot is stationed after the performing of a last of the at least one service task. The service system may be configured to cause the service robot to perform a sequence of two or more service tasks at predefined points in time, e.g. according to a service schedule.

The service system may be an inspection and testing system. It may not be configured to perform an exchange or replacement of a component of the wind turbine.

At least one of the service robot, a computing unit in the wind turbine or a computing unit or a remoter operation center may operate an artificial intelligence program configured to recognize, based on image data provided by the service robot, a component of the wind turbine to be serviced. The artificial intelligence program may for example be configured to detect in the image data at least one of an anchor point, a bolt, a hose, an emergency stop, a circuit breaker, a smoke detector, and/or another component of the wind turbine. A control unit of the service system may be configured to control the service robot to automatically perform a service task (e.g., inspection or test) upon detection of the component to be serviced, and/or the service system may be configured to enable an operator to perform the service task via remote control of the service robot.

In an exemplary embodiment, the service system may comprise the service robot and the wind turbine, and may optionally comprise the remote operation center.

According to another aspect of the invention, a wind turbine comprising two or more floors at different vertical positions is provided. The wind turbine comprises a service system having any of the configurations described herein. The wind turbine may not comprise the remote operation center, but may comprise a communication interface towards the remote operation center.

According to a further aspect of the invention, a method of servicing a wind turbine by means of a service system is provided. The wind turbine comprises at least two floors at different vertical positions, and the service system comprises a self-propelled service robot and a vertical movement aid extending between at least two of the floors, wherein the method comprises controlling the service system to perform at least one service task in the wind turbine. Controlling the service system comprises operating the service system in a first mode of locomotion in which the service robot moves self-propelled and without mechanical guidance on one of the at least two floors; operating the service system in a second mode of locomotion in which the service robot interacts with the vertical movement aid to move the service robot from the one floor to another of the at least two floors; and controlling the service robot to perform the at least one service task. By such method, advantages similar to the ones outlined further above may be achieved.

The method may be performed by a service system having any of the configurations described herein. Further, the service system and its components may be configured to perform any of the method steps described herein.

According to a further aspect of the invention, a method of operating a wind turbine is provided. The wind turbine may be an offshore wind turbine, for example a floating offshore wind turbine. The method comprises generating, by the wind turbine, electrical power and/or electrical energy during operation; transmitting at least a part of the generated electrical power and/or electrical energy to an electrical receiving arrangement. The electrical receiving arrangement may not be positioned in international waters, it may for example be positioned onshore and/or may be positioned within a 12-miles-zone of a respective sovereign national state over which the respective state has jurisdiction. The method further comprises supplying at least a part of the electrical power and/or of the electrical energy to an electrical utility grid, in particular to an onshore electrical utility grid; and performing a method of servicing the wind turbine in accordance with any of the aspects, embodiments, or examples described herein. By such method, the availability of the wind turbine and thus the supply with electrical power or electrical energy may be improved.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a service system comprising a service robot according to an embodiment of the invention.
Fig. 2 is a schematic drawing illustrating different floors of a wind turbine on which service tasks are to be performed according to an embodiment of the invention.
Fig. 3 is a schematic drawing illustrating a service robot interacting with a vertical movement aid of a service system according to an embodiment of the invention.
Fig. 4 is a schematic drawing showing a holding device of a service robot according to an embodiment of the invention.
Fig. 5 is a schematic drawing illustrating another example of a service robot interacting with a vertical movement aid of the service system.
Fig. 6 is a schematic drawing illustrating another example of a service robot interacting with a vertical movement aid of the service system.
Fig. 7 is a schematic drawing showing a service robot according to an embodiment of the invention.
Fig. 8 is a schematic drawing illustrating another example of a service robot interacting with a vertical movement aid of the service system.
Fig. 9 is a schematic drawing illustrating another example of a service robot interacting with a vertical movement aid of the service system.
Fig. 10 is a schematic drawing showing a manipulator of a service robot of the service system according to an embodiment.
Fig. 11 is a schematic drawing showing a rotating platform of a service robot of the service system according to an embodiment.
Fig. 12 is a schematic drawing showing two states of an anchor point to be inspected by the service system according to an embodiment.
Fig. 13 is a schematic drawing showing an end effector of a service robot according to an embodiment.
Fig. 14 is a schematic drawing showing an end effector of a service robot according to an embodiment.
Fig. 15 is a flow diagram illustrating a method of operating a service system according to an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

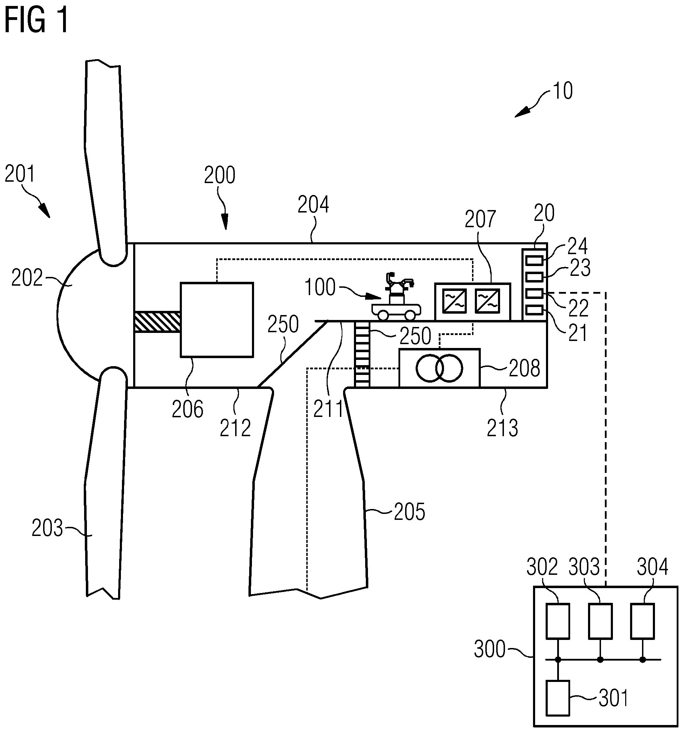

Fig. 1 schematically illustrates a service system 10 according to an embodiment that comprises a service robot 100 and a vertical movement aid 250 with which the service robot 100 interacts to move between at least a first floor 211 and a second floor 212. Further movement aids 250 may be provided to allow the service robot 100 to move to further floors (e.g. 213) of the wind turbine. Service robot 100 is thus enabled to perform different service tasks on different floors 211, 212, 213 of the wind turbine. At least two floors lie at a different vertical position (e.g., floors 211 and 212), yet some floors may lie at a similar vertical position (such as floors 212 and 213). Floors may also be designated as platforms herein; however, they may not be flat and they may not lie in a horizontal plane, but may also be inclined against a horizontal plane.

Wind turbine 200 to be serviced by service system 10 comprises a rotor 201 having a hub 202 and rotor blades 203. Nacelle 204 is mounted on wind turbine tower 205 and may include components of an electric power system of the wind turbine, such as a power generation system 206, which may include a generator coupled directly or via a gearbox to rotor 201. Generated electrical power may be at least partially converted by a power converter 207 located on first floor 211 (which may thus be designated as transformer platform), and may be transformed by a transformer 208 located on the third floor 213 (which may thus be designated as converter platform). The generator is located on a second floor 212 which may be designated as a generator platform. Service system 10 may be configured to cause the service robot 100 to perform a service task such as inspection or testing, on at least two, preferably on each of the floors 211, 212 and 213. Note that first and second floors 211, 212 may be different floors in other implementations.

Service robot 100 is self-propelled, so that it can move independently on the respective floor. It may move freely in two dimensions on the respective floor and without mechanical guidance. A docking station 20 may be provided on one of the floors, and service robot 100 may be stationed on the respective floor. Such docking station 20 may include a charger 21 configured to charge an energy storage device, e.g. a battery, of service robot 100, for example via electrical contacts or induction. Further, a communication interface 22 is provided in docking station 20 and configured to wirelessly communicate with the service robot 100. Via such wireless communication connection, monitoring data collected by service robot 100 and/or control commands to be provided to service robot 100 may be exchanged. Further, the communication interface 22 may be configured to establish a data communication connection with a remote operation center 300. Via such data connection, monitoring data collected by service robot 100 and/or control commands to be provided from the remote operation center 300 to the service robot 100 may be exchanged. In other implementations, remote operation center 300 may directly communicate with the service robot 100, for example via a cellular network or the like. Service robot 100 may include a respective communication interface for such wireless communication.

The remote operation center 300 may include a processing unit 301 and memory 302 storing control instructions that are executed by processing unit 301. Processing unit 301 and memory 302 may be implemented in one or more computers present at remote operation center 300 and may for example comprise respective microprocessor(s) and memory unit(s), such as RAM, ROM, Flash Memory, a hard disk drive, and the like. A communication interface 303 of the remote operation center 300 may further establish the data communication connection with the communication interface 22 or directly with the service robot 100. By software operating on the data processing unit 301, monitoring data received from service robot 100 may be analyzed, for example to detect a component of the wind turbine to be serviced in image data received from service robot 100. An artificial intelligence (AI) program may be operated on processing unit 301 to make such detection. A control program running on processing unit 301 may furthermore provide control instructions to service robot 100 to perform a service task, for example automatically after detecting of a component to be serviced in the image data.

Remote operation center 300 further comprises a user interface 304, which may allow a service operator to remotely control the service robot 100. User interface 304 may comprise a visual interface configured to display image data received from the service robot 100 and/or from wind turbine 200. It may further visualize other monitoring data, such as measurement data, received from service robot 100 and/or wind turbine 200. An input device, such as a mouse, a joystick, a touch pad, or any other input device, may be provided to generate control commands for moving the service robot 100 on the respective floor of the wind turbine and, by interaction with the vertical movement aid 250, to move between at least two floors of the wind turbine. Alternatively, such control commands may be generated automatically by processing unit 301 of the remote operation center 300, by a controller within the service robot 100, and/or by a computing unit 24 in wind turbine 200, which may be comprised in the docking station 20 or at another location, e.g. within a controller of the wind turbine. Service system 10 may thus implement a semiautomatic control, wherein movement of the service robot 100 is controllable automatically, and is further controllable by remote control.

Similarly, a manipulator of the service robot 100 (described in greater detail further below) may be operated by control commands that are generated by service robot 100, and/or that are received from processing unit 24 of the docking station 20, from the processing unit 301 of the remote operation center 300 or from a human operator via the user interface 304. Service robot 100 may thus perform one or more service tasks automatically and/or under remote control of a service operator.

To perform different service tasks, the service robot 100 may be provided with one or more robotic arms to which an end effector may be mounted. An end effector station 23 may be provided that stores two or more end effectors in such a way that they can be mounted to the service robot 100. End effector station 23 may form part of docking station 20 or may be provided separate there from. End effector station 23 may be configured to perform the mounting of the end effector to the robotic arm, and/or the robot 100 may be configured to perform such mounting. Preferably, the mounting of an end effector to the robotic arm is performed automatically by service system 10 in dependence on the service task to be performed. In other implementations, mounting the end effector may occur under control of an operator at the remote operation center 300 using user interface 304.

Service system 10 may operate in a first mode of locomotion in which the service robot 100 is freely (in two dimensions) moved on the respective floor of the wind turbine, and in a second mode of locomotion in which the service robot 100 interacts with the vertical movement aid 250 to move between floors. The movement in the second mode of locomotion may accordingly be a bound movement in one direction, e.g. as determined by the vertical movement aid 250. A great degree of versatility and maneuverability of the service robot 100 may thus be achieved, while allowing the service robot 100 to reach different floors at different vertical positions.

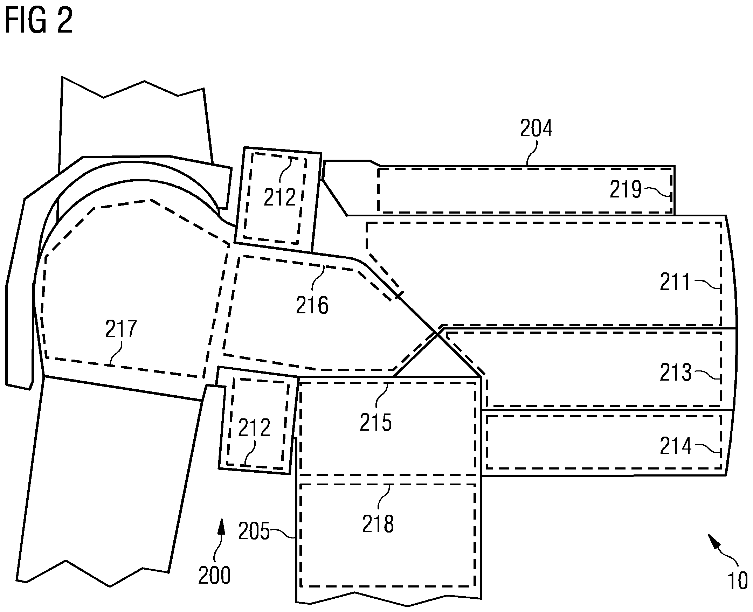

Fig. 2 schematically illustrates an exemplary wind turbine 200 and the different floors or platforms that may be present in such wind turbine. The floor 211 is a converter platform on which the power converter 207 is provided. The floor 213 is a transformer platform on which the power transformer 208 is provided. The present example shows a direct drive wind turbine having a generator with a hollow shaft. The floor 212 is a generator platform that accommodates the generator or generator components, such as stator and cooling system. Wind turbine 200 further comprises a transmission platform 214 on which power transmission equipment is provided, such as high-voltage AC (HVAC) or other transmission equipment. The yaw platform 215 is provided at a position of the yaw bearing or yaw drive that provides a rotational movement between nacelle 204 and tower 205. The bed frame floor 216 is located at a bed frame of the wind turbine. The bed frame may be mounted via the yaw bearing to the tower 205 and may carry the generator and the wind turbine rotor. A hub floor 217 may further be provided and may be arranged within a hub of the wind turbine. From hub floor 217, drives such as hydraulic or electric pitch drives, may be accessible. A tower platform 218 may be located in the tower 205 of the wind turbine. Plural such tower platforms may be provided, for example one or a combination of a tower top section platform, a tower mid section platform and/or a tower bottom platform. Furthermore, wind turbine 200 may include a top platform 219, which may be or comprise a heli-hoist platform, a crane platform, and/or a rooftop platform. It should be clear that these are exemplary platforms and that wind turbine 200 may comprise fewer platforms or floors, or may comprise further additional platforms or floors.

The service robot 100 may be stationed on one of the floors of the wind turbine 200, preferably on a floor on which a comparatively large number of service tasks are to be performed, such as on the converter platform 211, or the transformer platform 213. One or more vertical movement aids 250 may extend to one or more floors or platforms provided in wind turbine 200 that accordingly are accessible via the service robot 100. Preferably, the service system is configured so that the service robot can access at least the converter platform 211, the transformer platform 213 and optionally the yaw platform 215 (i.e., respective vertical movement aid(s) may be installed between these platforms). Further preferably, the service system 10 is configured so that the service robot 100 can reach the bed frame platform 216 and optionally the hub platform 217. Further, the service system 10 may be configured so that the service robot 100 can additionally reach the tower platform 218, in particular one or a combination of the tower bottom platform, tower mid section platform and tower top section platform. Further, service system 10 may be configured so that the service robot 100 can additionally reach the top platform 219, e.g. the heli-hoist platform, the crane platform, or the rooftop platform. In some implementations, the service system 10 may be configured so that the service robot 100 can reach each of these platforms. It is self-explanatory that it is not necessary to provide a vertical movement aid between each possible combination of two floors or platforms; rather, the service robot may reach one platform via another platform, so that it is generally sufficient if one, two, or three vertical movement aids lead to each floor or platform. Centrally located platforms, such as the bed frame platform 216, may comprise further vertical movement aids.

Accordingly, a service system 10 having a high degree of flexibility may be provided, and a variety of service tasks may be performed by service system 10 on each of these platforms within the wind turbine 200.

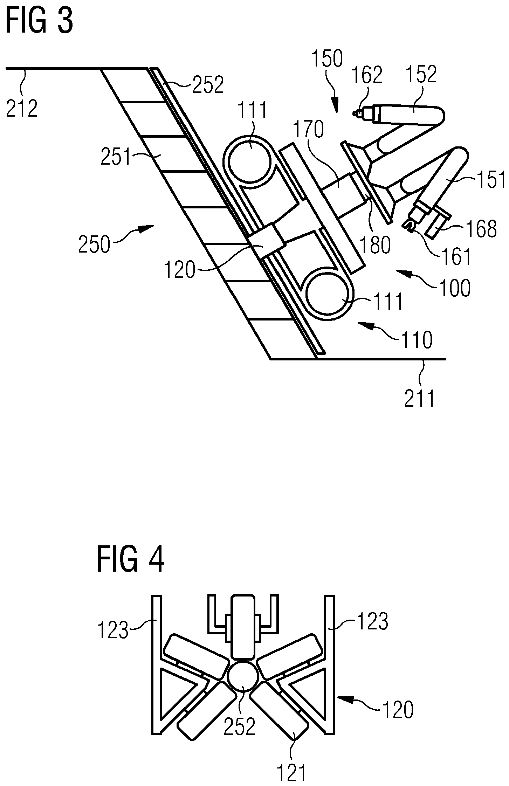

Fig. 3 schematically illustrates an exemplary implementation of the service robot 100 and the vertical movement aid 250 that extends between a first floor 211 and a second floor 212, which may be any of the exemplary floors mentioned above. Vertical movement aid 250 comprises a staircase 251 and a rail 252 running along stairs 251. Service robot 100 includes a mobile unit 110, also termed "mobile platform", which propels the service robot 100. Service robot 100 further comprises a holding device 120 configured to interact with the vertical movement aid 250 and, in the present example, to hold onto the rail 252. It may include a clamp, a grip, a roller, and/or a carriage to hold onto rail 252. By mobile unit 110, service robot 100 can thus be moved up and down the stairs 251 while the movement is stabilized by holding device 120 holding onto the rail 252. In other configurations, no holding device 120 and no rail 252 may be provided, and the mobile unit 110 may interact with the staircase 251 as vertical movement aid to move the mobile robot between floors 211, 212.

Fig. 4 illustrates an exemplary implementation of the holding device 120 which comprises two, three, or more rollers 121. Rail 252 has a circular cross-section, and the rollers 121 clamp onto the rail 252 to guide the movement of service robot 100. It should be clear that the rail may have a different cross-sectional shape, such as square or pentagonal, and a different number of rollers may clamp thereto. One or more rollers may be mounted to one or more movable brackets 123 that are actuatable to clamp to the rail 252 and thus to engage the holding device 120 with the rail. Two such brackets 123, each carrying two rollers, are shown in Fig. 4.

Turning back to Fig. 3, the service robot 100 may comprise a manipulator 150, which in the present example includes two robotic arms 151, 152, to each of which an end effector 161, 162 is mounted. The end effectors 161, 162 are configured to perform respective service tasks and are explained in more detail further below. Further, manipulator 150 includes a height adjustment mechanism 170 and a rotating mechanism 180, which are likewise explained in more detail further below, and which are optional. Manipulator 150 may in other implementations only comprise a single or further, e.g. three or more, robotic arms. One or more cameras 168 and/or one or more sensors may further be provided on the service robot 100. They may be mounted to the mobile platform 110 and/or to the manipulator 150. For example, a camera 168 may be provided at the end of one, or of both, robotic arms 151, 152, which may facilitate inspection of a wind turbine component due to the movability of the camera 168 and which may further facilitate operating the respective end effector. Such one or more cameras 168 may for example capture image data that is transmitted to the computing unit 24 and/or to the processing unit 301 for processing, as described above.

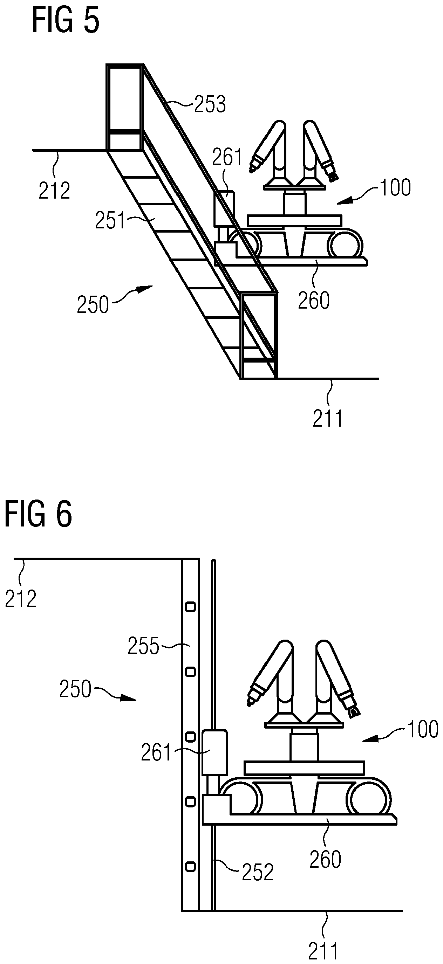

Fig. 5 schematically illustrates a further possible implementation of the vertical movement aid that provides in the second mode of locomotion a driven movement of the service robot 100 which is driven by an actuator 261 that is external to the service robot 100. The vertical movement aid 250 may comprise an elevator 260 onto which the service robot 100 can move. Actuator 261 may be an elevator drive that moves the elevator 260 in an at least partially vertical direction between the floors 211 and 212. Such elevator 260 may be provided on an existing staircase and/or handrail or may be provided as a separate vertical movement aid between the two floors (in which case it may comprise respective guides such as tracks or rails, on which the elevator platform moves). Elevator 260 may in particular comprise an elevator platform configured to receive the service robot 100, a mechanical guiding device configured to guide the movement of the respective platform between the two floors, and the actuator 261. The actuator may for example comprise a chain or rack and pinion configuration, a rope and winch, an electric motor, a hydraulic or pneumatic cylinder, or any other suitable configuration for moving the elevator platform between the two floors.

Fig. 6 illustrates a further exemplary implementation of the vertical movement aid 250, which also includes an elevator 260 and an actuator 261. In the example of Fig. 6, the elevator 260 is provided on a ladder 255 between the two floors 211, 212. An additional rail 252 may be mounted to or adjacent to the ladder 255 to guide the elevator 260. Using such elevator 260, large vertical distances may be bridged by service robot 100 in a (substantially) vertical direction.

In the examples of Figs. 5 and 6, the service robot 100 interacts with a vertical movement aid by driving onto the platform of elevator 260 and by being lifted therewith. No holding device 120 is thus required on the service robot. In other implementations providing a driven movement of the service robot, the vertical movement aid may for example comprise a conveyor, an escalator, or a hoist that transports the service robot between floors 211, 212. For example, a conveyor chain or belt may run between the two floors 211, 212, and the service robot may include a holding device 120 to clamp onto such chain or belt so as to be elevated from the floor 211 to floor 212. Preferably, the service system 10 comprises at least a vertical movement aid providing a driven movement of the service robot or the service robot 100 comprises the holding device to support a self-driven motion by the robot 100 between the two floors. Both may be present to reach different floors.

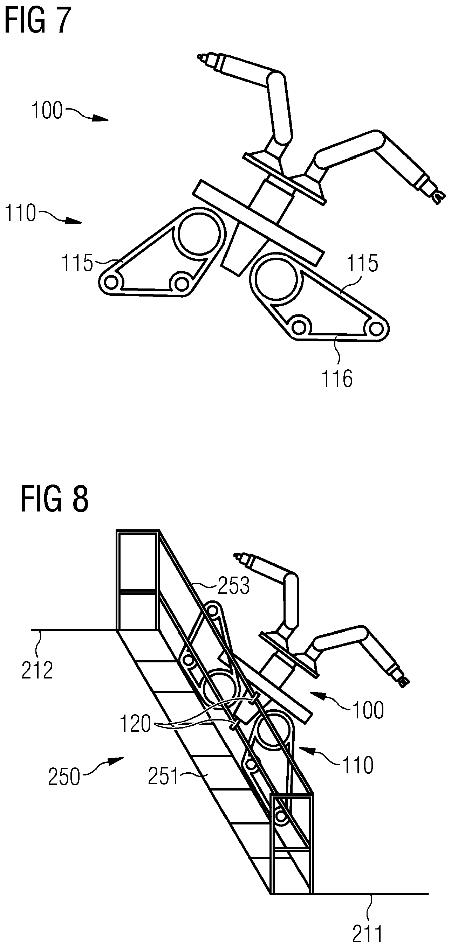

Fig. 7 illustrates a further exemplary implementation of the mobile unit 110, wherein one or more tracked drives are provided. Service robot 100 preferably includes two, three, or four tracked drives 115 each including a track 116, such as rubber track or a track shoe assembly or track chain. This may allow the self-propelled robot 100 to climb steeper slopes and to bridge higher vertical distances as well as uneven surfaces, such as stairs. Service robot 100 may additionally or alternatively comprise legs to increase maneuverability. In a particular implementation, as shown in Fig. 7, the legs may be provided by the tracked drives 115. As illustrated, these may comprise plural rollers and have a longitudinal extension, the orientation of which may be changed. As illustrated in Fig. 8, such configuration of the mobile unit 110 may facilitate the interaction with the vertical movement aid and may in particular allow the service robot to climb steeper vertical movements aids, such as steep stairs. The service robot may be configured to climb staircases steeper than 45°. To support such movement, the service robot 100 may optionally be provided with a holding device 120, such as one, two, or more hooks, which may hold onto or clamp onto the handrail 253 of the staircase. The service robot may thus traverse steep slopes between floors in a self-propelled manner.

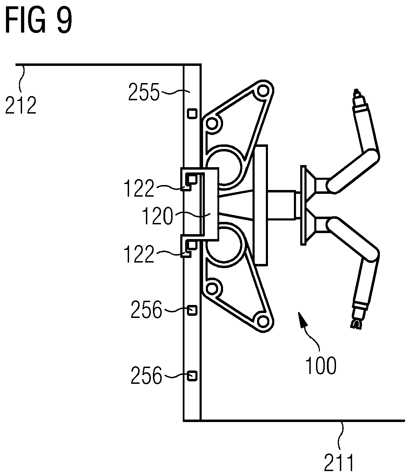

A further exemplary implementation is illustrated in Fig. 9, wherein the service robot 100 of Fig. 7 is provided with a holding device 120 comprising one, two or more hooks 122 configured to interact with the vertical movement aid 250, such as with the rungs 256 of the ladder 255. The service robot 100 may thus be configured to climb a ladder 255 in a self-propelled manner. Even in confined spaces where no stairs having a low slope can be provided, the service robot 100 is allowed to travel between different vertical floors of the wind turbine using existing vertical movement aids made for humans, such as steep ladders or stairs.

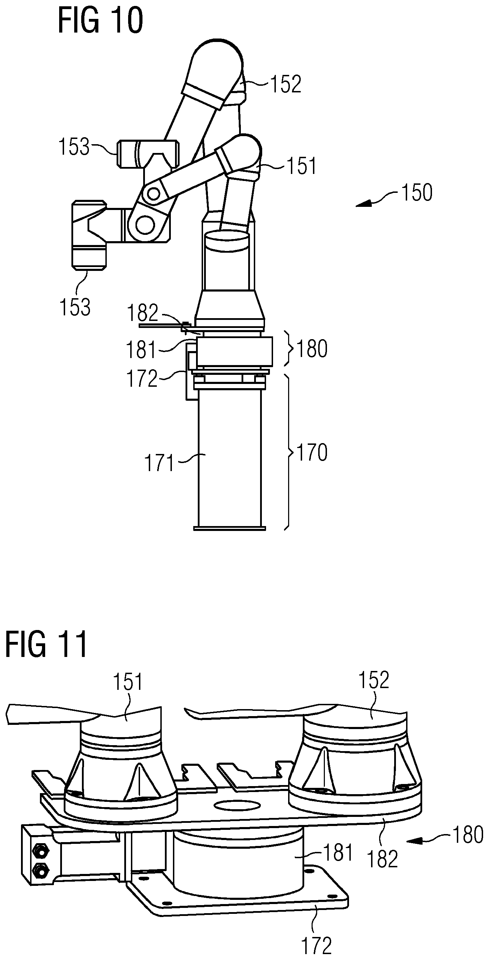

Fig. 10 illustrates an exemplary implementation of the manipulator 150 of the service robot 100 described above. Manipulator 150 comprises at least one, preferably at least two robotic arms 151, 152. Each robotic arm may have at least one, preferably at least two or three joints, such as articulated and/or rotary joints. At the end of the robotic arm, and end effector or a connection interface 153 configured to receive and end effector may be provided. The robotic arm may thus be equipped with different end effectors. Additionally or alternatively, the robotic arm may be equipped with a sensor or camera. This allows the imaging of a wind turbine component to be serviced in a desirable manner, e.g. from different predefined directions.

Optionally, the manipulator 150 may comprise a height adjustment mechanism 170 capable of extending the reach of the manipulator 150 in vertical direction. Height adjustment mechanism 170 may be mounted to the mobile platform and the one or more robotic arms may be mounted onto the height adjustment mechanism, such as on a height adjustment platform. Height adjustment mechanism 170 may include a telescopic section, such as a telescopic cylinder, or other mechanism, such as a scissor mechanism, a folding mechanism, or the like. From a retracted state, the mechanism may provide an extension in vertical direction by at least 50%, 100%, or 150% of its height in vertical direction.

Optionally, the manipulator 150 may comprise a rotating mechanism 180 mounted to the mobile platform, e.g. directly or via height adjustment mechanism 170, if provided. Rotating mechanism 180 may allow a rotation of the one, two or more robotic arms 151, 152. It may include a rotation drive 181, such as an electrically driven motor, e.g. gear motor, and a mount 182, such as a plate, onto which a robotic arm may be mounted. An exemplary implementation is shown in Fig. 11, wherein the height adjustment mechanism 170 comprises a mount 172, such as a plate. Onto the mount 172, the rotating mechanism 180 is mounted. On the mount 182, the two robotic arms 151 and 152 are mounted. This allows changing the orientation of the arrangement of the two robotic arms, which facilitates manipulation in confined spaces. In particular, it is not necessary to turn the robot 100 in order to achieve a desired relative arrangement of the two robotic arms. In other implementations, rotating mechanism 180 may be mounted below the height adjustment mechanism 170, or may not be provided.

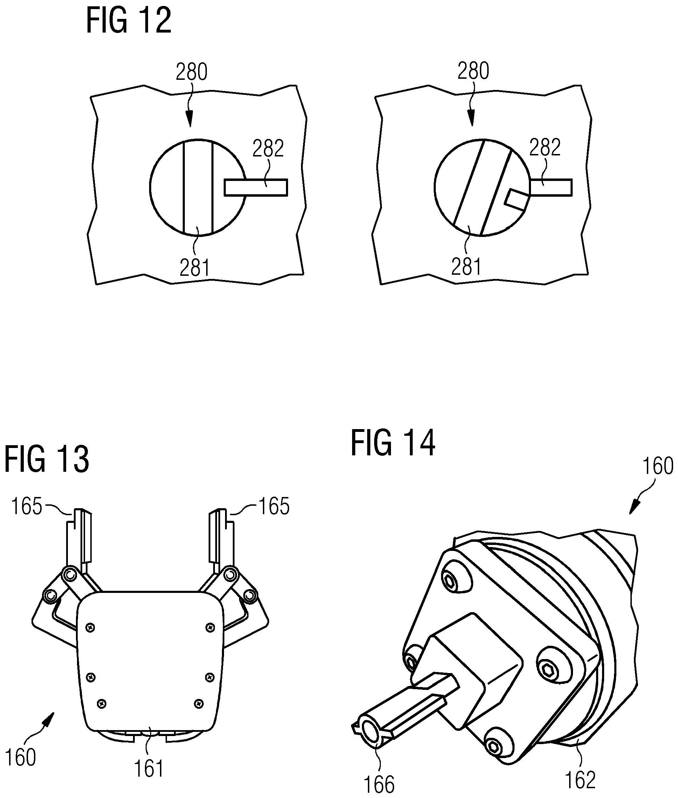

The service robot 100 may comprise a camera for performing an inspection task; the manipulator 150 is thus optional. It is however beneficial to mount the camera on a robotic arm to provide an increased flexibility during imaging. Fig. 12 illustrates an inspection task that may be performed by the service robot 100 on any of the floors of the wind turbine mentioned above, in particular on one or a combination of the converter platform, the hollow shaft platform and the top platform. The service robot may be moved to the location of the anchor point 280, which may be on the same floor on which the service robot is stationed or on a different floor, so that movement involves interaction with the vertical movement aid. An appendage of the robot including the camera, such as a robotic arm, may then be moved in front of the anchor point 280. Robot movement and camera alignment may each occur automatically or under the control of an operator, e.g. at remote operation center 300. Software, which may include the above-mentioned artificial intelligence program, may detect the anchor point 280 and may start an automatic inspection task as part of the service task. This may involve the taking of images from at least two different positions and/or angles, such as from the front as shown in Fig. 12 and from the side (not shown). The respective images may be evaluated by the service robot 100, by the computing unit 24 in the wind turbine and/or by the remote operation center 300, e.g. automatically or by an operator via user interface 304. Anchor point 280 may include an eye 281 onto which service personnel may hook a harness for personnel safety. An alignment mark 282 may indicate that tension and fall direction of the anchor point are within specifications, as illustrated on the left-hand side of Fig. 12. On the righthand side, an anchor point is illustrated that has become unaligned or loosened, which can be recognized from the image data. Likewise, it may be detected if the anchor point is deformed (e.g. using side images) and/or if corrosion is present. By detecting such degradation of anchor point 280 by service robot 100, safety of service personnel may be increased and the servicing requirements for the wind turbine may be met.

Other service tasks may include testing tasks and/or function check tasks. Figs. 13 and 14 illustrate two end effectors 160 that may be used for such tasks. Fig. 13 shows a first end effector 161 in form of a gripper having two gripping elements 165, such as fingers, claws, or the like. Using gripper 161, service system 10 may be configured to perform an emergency stop test, which may include the pressing of a respective emergency stop button and the resetting of the emergency stop. The test may be performed on one or more emergency stops located on at least one of a bed frame platform, a tower platform, a converter platform, and a transformer platform. Similar to the inspection task described with respect to Fig. 12, such testing task may include moving the service robot to the location of the emergency stop, aligning the end effector on the robotic arm with the emergency stop, and performing the described test procedure, which may occur automatically or under control of an operator at remote operation center 300. If the test indicates a failure of the emergency stop, the respective system may be scheduled for repair.

Fig. 14 illustrates a second end effector 162 in form of a key 166 for a cabinet of the wind turbine, such as a switching cabinet. End effector 162 may be operable to turn the key 166 in order to open a cabinet door. This may allow the service robot 100 to perform one or more inspection and/or testing tasks in the respective cabinet. The robot 100 may again be moved to the location of the cabinet and an appendage with the end effector 162 may be positioned in front of the lock of the door of the electrical cabinet, which may again be detected by an AI program. An opening task may then be performed by which the end effector 162 opens the lock and further opens the cabinet door, which may again occur automatically or under control of the operator.

A circuit breaker function check may then be performed by robot 100 within the electrical cabinet. This may involve the triggering of a circuit breaker, e.g. by actuating a testing switch using gripper 161. If the relay or circuit breaker is triggered after actuating the test button, it may be reset by means of the gripper 161. If the function test is unsuccessful, a repair may be scheduled.

As another example, the cabinet may comprise a smoke detector, or such smoke detector may be provided at another position within the wind turbine. An end effector comprising a smoke detector test spray (generating test smoke) may further be provided. The service robot may be moved to the location of the smoke detector and the appendage, e.g. robotic arm, comprising the test spray may be positioned in front of the smoke detector, again automatically or under control of the operator. The AI program may detect the respective smoke detector, and a respective function check sequence may be started, automatically or by the operator. The test spray end effector may generate test smoke and the response of the smoke detector may be monitored. Upon successful activation of an alarm, the alarm may be reset, e.g. from remote operation center 300. In case of an unsuccessful function check, a repair may be scheduled.

It should be clear that the service system 10 may be configured so that the service robot 100 performs one or more service tasks subsequently, and may further return after performing the last service task to the charger, e.g. the docking station 20.

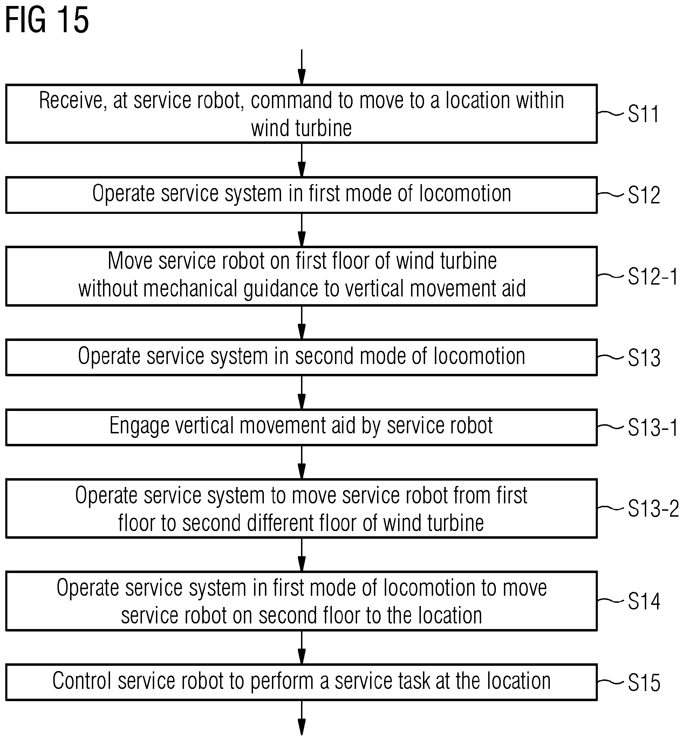

Fig. 15 shows a flow diagram of a method according to an embodiment. In step S11, the service robot receives a command to move to a location within the wind turbine, which may be any location described above with respect to the exemplary service tasks. The command may be a remote control command from user interface 304, from computing unit 24, or from processing unit 301. Service robot 100 may also receive only the location within the wind turbine and may autonomously move to the location. In step S12, the service system operates in the first mode of locomotion in which the service robot moves freely on the floor on which it is stationed, i.e. without mechanical guidance, to the vertical movement aid (step S12-1). Upon reaching the vertical movement aid, the service system operates in a second mode of locomotion (step S13) which may include engaging the vertical movement aid by the service robot (step S13-1). As mentioned above, the holding device 120 may for example grip onto a respective support, or the robot may move onto the platform of an elevator 260 or the like. In step S13-2, the service system is operated to move the service robot from the first floor to the second different floor of the wind turbine, which may occur under operation of the mobile unit 110 of the robot, or under operation of the actuator 261. Upon reaching the second floor, the service system is again operated in the first mode of locomotion in which the service robot moves freely on the second floor to the respective location (step S14). Upon reaching the location, the service robot may be controlled to perform the respective service task (step S15). Detailed examples of such service tasks to be performed at the respective location are given above. A plurality of different service tasks on different floors of the wind turbine may thus be performed in an efficient manner and without the need for having service personnel present at the wind turbine.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A wind turbine service system configured to perform at least one service task in a wind turbine (200), wherein the wind turbine (200) comprises at least two floors (211, 212) at different vertical positions, wherein the wind turbine service system (10) comprises:
- a service robot (100) that is self-propelled and that is controllable to perform the at least one service task; and
- a vertical movement aid (250) extending between at least two of the floors (211, 212),
wherein the wind turbine service system (10) is configured to have a first mode of locomotion in which the service robot (100) is moved self-propelled and without mechanical guidance on at least one of the floors (211, 212), and wherein the wind turbine service system (10) is further configured to have a second mode of locomotion in which the service robot (100) interacts with the vertical movement aid (250) to move the service robot between the at least two floors (211, 212).

2. The wind turbine service system according to claim 1, wherein the service system (10) is configured to provide in the second mode of locomotion a mechanically guided movement of the service robot (100) and/or a driven movement of the service robot (100) that is driven by an actuator (261) external to the service robot (100).

3. The wind turbine service system according to claim 1 or 2, wherein the vertical movement aid (250) comprises one or a combination of a guiding rail (251, 252), a track, a ladder (255), a staircase (251), a conveyor, an escalator, an elevator (260), and a hoist.

4. The wind turbine service system according to any of the preceding claims, wherein the service robot (100) comprises a holding device (120) configured to interact with the vertical movement aid (250), such as a clamp (123), a hook (122), a grip, a roller (121), a carriage, and/or a pinion.

5. The wind turbine service system according to any of the preceding claims, wherein the service system (10) is configured to provide in the first mode of locomotion a free movement of the service robot (100) in two dimensions on the respective floor.

6. The wind turbine service system according to any of the preceding claims, wherein the service system (10) is configured to perform a service task on each of the at least two floors (211, 212) by means of the service robot (100).

7. The wind turbine service system according to any of the preceding claims, wherein at least two of the floors are arranged within a nacelle (204) of the wind turbine, wherein the vertical movement aid (250) comprises a vertical movement aid between said at least two floors within the nacelle (204) .

8. The wind turbine service system according to any of the preceding claims, wherein the at least two floors comprise one or a combination of a converter platform (211) comprising an electrical power converter (207); a transformer platform (213) comprising an electrical power transformer (208); a transmission platform (214) comprising electrical power transmission equipment; a yaw platform (215) located at a position of a yaw drive or yaw bearing of the wind turbine; a bedframe floor (216) located at a bedframe of the wind turbine; a generator floor (212) located within a hollow shaft of a generator of the wind turbine or comprising a generator of the wind turbine; a hub floor (217) located within a hub of a wind turbine rotor (201) of the wind turbine; a top platform (219) located on a top of a nacelle (204) of the wind turbine; and a tower platform (218) located in a tower (205) of the wind turbine.

9. The wind turbine service system according to any of the preceding claims, wherein the service system (10) further comprises a docking station (20) configured to provide electrical power to the service robot (100) to charge an energy storage device of the service robot.

10. The wind turbine service system according to any of the preceding claims, wherein the service robot (100) comprises a manipulator (150), a sensor, and/or a camera (168).

11. The wind turbine service system according claim 10, wherein the manipulator (150) comprises a height adjustment mechanism (170) configured to extend a reach of the manipulator in a vertical direction.

12. The wind turbine service system according to any of the preceding claims, wherein the at least one service task includes an inspection of a mechanical component (280) of the wind turbine, preferably the inspection of a bolt connection and/or of an anchor point (280).

13. The wind turbine service system according to any of the preceding claims, further comprising a remote operation center (300), wherein the service system (10) comprises a data connection between the service robot (100) and the remote operation center (300) to transmit monitoring data from the service robot (100) to the remote operation center (300) and/or to transmit control commands from the remote operation center (300) to the service robot (100).

14. A method of servicing a wind turbine (200) by means of a service system, wherein the wind turbine (200) comprises at least two floors (211, 212) at different vertical positions, and wherein the service system (10) comprises a self-propelled service robot (100) and a vertical movement aid (250) extending between at least two of the floors (211, 212), wherein the method comprises controlling the service system (10) to perform at least one service task in the wind turbine (200), wherein controlling the service system comprises:
- operating the service system (10) in a first mode of locomotion in which the service robot (100) moves self-propelled and without mechanical guidance on one of the at least two floors (211, 212);
- operating the service system (10) in a second mode of locomotion in which the service robot (100) interacts with the vertical movement aid (250) to move the service robot (100) from the one floor to another floor of the at least two floors (211, 212); and
- controlling the service robot (100) to perform the at least one service task.

15. A method of operating a wind turbine, wherein the wind turbine (200) is an offshore wind turbine, in particular a floating offshore wind turbine, wherein the method comprises:
- generating, by the wind turbine (200), electrical power and/or electrical energy during operation;
- transmitting at least a part of the generated electrical power and/or electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction;
- supplying at least a part of the electrical power and/or of the electrical energy to an electrical utility grid, in particular to an onshore electrical utility grid; and
- performing a method of servicing the wind turbine according to claim 14.
